# EUROPÄISCHE PATENTANMELDUNG

(11) **EP 2 908 021 A2**
(43) Veröffentlichungstag der Anmeldung: **19.08.2015**
(21) Anmeldenummer: 15153764.4
(22) Anmeldetag: 04.02.2015
(51) Int. Cl.: F16D 13/75, F16D 13/71, F16D 13/58, F16D 13/70

(54) **Selbstnachstellende Kupplung mit modifizierter Sensorkraft**

(30) Priorität: 13.02.2014 DE 102014202607
(71) Anmelder: Schaeffler Technologies AG & Co. KG, 91074 Herzogenaurach (DE)
(72) Erfinder: Voorspoels, Ludovic, 67410 Drusenheim (FR); Fohrer, Thierry, 67850 Offendorf (FR)

(57) **Zusammenfassung**

Die Erfindung betrifft eine Reibkupplung zum kraftschlüssigen Verbinden einer Anpressplatte mit einer angetriebenen Kupplungsscheibe, wobei eine Tellerfeder gegenüber einem Kupplungsdeckel vorgespannt ist, um die Anpressplatte mit einer Tellerkraft zu beaufschlagen, wobei eine Sensorkraft der Tellerfederkraft permanent entgegengerichtet ist. Aufgrund der Selbstnachstellung laufen Reibkupplungen Gefahr einen zweiten Regelpunkt im Ausrückweg des Kupplungsvorganges zu generieren. Dies zieht verschiedene Nachteile, insbesondere einen Komfortverlust, nach sich. Daher wird vorgeschlagen, eine Verstärkungsfeder zur ausrückaktivierten Beaufschlagung der Tellerfeder vorzusehen, wobei die ausrückaktivierte Beaufschlagung der Tellerfederkraft entgegengerichtet ist. Damit kann dem charakteristischen Verhalten der Tellerfederkraft bei großen Ausrückwegen entgegengewirkt werden, indem die Sensorkraft ausrückaktiviert teilweise auf die Verstärkungskraft der Verstärkungsfeder zurückgeht. Auf diese Weise ist es möglich höhere Lebensdauern für Reibkupplungen mit Selbstnachstellung zu erzielen.

## Beschreibung

Die Erfindung betrifft eine Reibkupplung zum kraftschlüssigen Verbinden einer Anpressplatte mit einer angetriebenen Kupplungsscheibe, wobei eine Tellerfeder gegenüber einem Kupplungsdeckel vorgespannt ist, um die Anpressplatte mit einer Tellerfederkraft zu beaufschlagen, wobei eine Sensorkraft der Tellerfederkraft permanent entgegengerichtet ist.

Reibkupplungen werden standardmäßig in Antriebssträngen von Kraftfahrzeugen eingesetzt, um Drehmomente vom Motor auf das Getriebe zu übertragen, wobei während eines Schaltvorganges der Antriebsstrang entkuppelt und während einer Drehmomentübertragung eine Kopplung zwischen Motor und Getriebe hergestellt ist.

In der Vergangenheit hat man sich dem Thema der nachstellenden, insbesondere der selbstnachstellenden, Kupplung gewidmet, um im Fahrzeug den Fahrkomfort für den Fahrer vom Kupplungsverschleiß zu entkoppeln. Ferner war es möglich, dass verschleißbedingte Reparaturen vermieden und die Lebensdauer der Kupplung oder gegebenenfalls auch Doppelkupplung verlängert werden konnte.

Aus US 6,029,787A ist eine selbstnachstellende Reibkupplung bekannt, bei der eine Vorrichtung zwischen dem Kupplungsdeckel und der Tellerfeder in der Nähe des Zentrierbolzens angeordnet ist, um eine axiale Nachführung der Anpressplatte in Abhängigkeit des Verschleißes zu bewerkstelligen. In der Regel dient der Kupplungsdeckel als Rückhalt bei der Beaufschlagung der Anpressplatte mit einer Kupplungskraft, die im Wesentlichen aus der Federkraft der Tellerfeder stammt. Durch die Kontrolle eines definierten Anschlages der Tellerfeder am Kupplungsdeckel, kann die Selbsteinstellung automatisch während des Betriebes erfolgen.

Aus EP 1 586 784 A1 ist eine Kupplung bekannt, die eine Selbstnachstellung während eines elektrisch betätigten Kupplungsvorgangs automatisch vornimmt.

Da sich die bisherigen Konzepte selbsteinstellender Reibkupplungen bewährt hatten, vergrößerte sich zusehends die Anpressplattendicke. Auf diese Weise haben sich durch die Nachstellung auch die Lebensdauern der Reibkupplungen insgesamt deutlich erhöht. Nunmehr stößt man jedoch erneut an eine Grenze, die durch die Federkräfte der beteiligten Federn entsteht. Ausschlaggebend ist hierbei die Kraft-Weg-Charakteristik der Tellerfeder, die in ihrem Betriebspunkt aufgrund der erforderlichen Kupplungskraft sehr hoch ist und während des Kupplungsvorganges in Abhängigkeit vom Ausrückweg ein Minimum durchläuft und anschließend bei großen Ausrückwegen wieder ansteigt. Bei der der Tellerfederkraft entgegen gerichteten Sensorkraft ist ein derartiger Anstieg nicht zu verzeichnen, womit nach einem gewissen Verschleiß der Anpressplatte nachteiligerweise ein zweiter Regelpunkt entsteht, an welchem die Ausrückkraft genauso groß ist wie die Sensorkraft und sie darüber hinaus für große Ausrückwege auch noch übersteigt. Dies führt zu dem nachteiligen Effekt, dass der Mechanismus einer Selbstnachstellung zwar effektiv den Deckelanschlag verschiebt, jedoch der Bildung eines zweiten Regelpunktes nichts entgegenzusetzen hat. Das Ergebnis ist ein Komfortnachteil und eine Verkürzung der Lebensdauer der Reibkupplung.

Der Erfindung liegt die Aufgabe zugrunde, eine Reibkupplung anzugeben, die selbstnachstellend ist, aber deren Lebensdauer verlängert und deren Komforteigenschaften verbessert sind ohne die übrigen Funktionalitäten und standardmäßigen Vorteile einer Selbstnachstellung zu tangieren.

Die Aufgabe wird bei einer Reibkupplung der eingangsgenannten Art dadurch gelöst, dass eine Verstärkungsfeder zur ausrückaktivierten Beaufschlagung der Tellerfeder vorgesehen ist, wobei die ausrückaktivierte Beaufschlagung der Tellerfederkraft entgegengerichtet ist. Die Sensorkraft ist eine Summe aus verschiedenen Federkräften, die neben der Sensorfederkraft auch gegebenenfalls eine Haltefederkraft und/oder eine Belagfederkraft enthält. Die Sensorkraft ist als Summe mehrerer Federkräfte der Tellerfederkraft entgegengerichtet und wirkt permanent auf die Tellerfeder. Die Sensorfederkraft verläuft nach dem ersten Regelpunkt für größere Ausrückwege im Wesentlichen konstant.

Die Wirkung der Verstärkungsfeder wird erfindungsgemäß ausrückaktiviert zugeschaltet. Die Verstärkungsfeder wirkt daher nicht permanent auf die Tellerfeder, sondern entfaltet ihre Verstärkungskraft erst nach der teilweisen Ausführung eines Kupplungsvorgangs. Mit anderen Worten, bei einem festgelegten Ausrückweg wird ein Kontakt zur Verstärkungsfeder hergestellt, womit die Beaufschlagung der Tellerfeder durch die Verstärkungsfeder ausrückaktiviert ist. Nach der ausrückaktivierten Beaufschlagung der Tellerfeder trägt die Verstärkungsfeder mit ihrer Verstärkungsfederkraft zur Sensorkraft bei und erhöht diese derart, dass sie der Tellerfederkraft vorteilhaft entgegenwirkt. Effektiv wird ein möglicher zweiter Regelpunkt, der nach einem gewissen Verschleiß der Anpressplatte entstehen könnte, hinter den Deckelanschlag verlegt, womit er während des Kuppelvorgangs unerreichbar bleibt. Somit ist verhindert, dass bei einem vorliegenden Verschleiß und hohen Ausrückwegen die hohe Tellerfederkraft nicht mehr zu einem Komfortproblem wird, sondern ab der Überwindung des ersten Regelpunktes der Kuppelvorgang den dazu vorgesehenen Federn überlassen werden kann.

Bei einer vorteilhaften Ausführungsform ist ein Kontaktelement der Verstärkungsfeder in einem Verstellbereich der Tellerfeder angeordnet. Die Anordnung des Kontaktelementes der Verstärkungsfeder legt fest, bei welchem Ausrückweg ein Kontakt zur Verstärkungsfeder hergestellt wird. Die Anordnung des Kontaktelementes kann radial an verschiedenen Stellen der Tellerfeder beziehungsweise deren Verstellbereich angeordnet sein. Ausschlaggebend ist jedoch der axiale Abstand des Kontaktelementes zu einem Tellerfederelement, welches mit dem Kontaktelement der Verstärkungsfeder in Wechselwirkung tritt und die Beaufschlagung der Tellerfeder ausrückaktiviert einleitet. Somit ist zu unterscheiden, ob eine Feder der Reibkupplung eine permanent beaufschlagte Feder ist, oder ob sie ausrückaktiviert eingebaut ist, das heißt, nur über einen gewissen Teil des möglichen Ausrückweges beansprucht wird.

Grundsätzlich ist es möglich, dass nicht nur eine Verstärkungsfeder zur ausrückaktivierten Beaufschlagung der Tellerfeder vorgesehen ist, sondern es können mehrere Verstärkungsfedern vorgesehen sein, die beispielsweise in Umfangsrichtung benachbart zueinander angeordnet sind und gegebenenfalls auch über ein Verbindungselement miteinander verbunden sind. Somit wird die Tellerfeder mit einer Gesamtkraft aller beteiligten Verstärkungsfedern beaufschlagt, deren Verstärkungskräfte sich aufsummieren und als Gesamtkraft zur Sensorkraft beitragen.

Bei einer vorteilhaften Ausführungsform ist das Kontaktelement eine Kante, eine Rundung oder ein Endstück der Verstärkungsfeder. Vorteilhafterweise kann das Kontaktelement in Abhängigkeit von der Position der Verstärkungsfeder oder von den angrenzenden Bauteilen oder auch in Abhängigkeit von der Form der Tellerfeder ausgestaltet werden, solange die Übertragung einer Kraft über den Kontakt zwischen Verstärkungsfeder und Tellerfeder gewährleistet ist.

Bei einer vorteilhaften Ausführungsform ist die Verstärkungsfeder an einer Sensorfeder oder unmittelbar am Kupplungsdeckel oder mittelbar am Kupplungsdeckel fest. Da die Tellerfeder bei einem Kupplungsvorgang bewegt wird, stellt in dieser Ausführungsform die Verstärkungsfeder das passive Element dar, welches durch eine Bewegung der Tellerfeder kontaktiert wird, um die Beaufschlagung der Tellerfeder ausrückaktiviert einzuleiten. Dazu kann die Verstärkungsfeder beispielsweise in der Sensorfeder einliegen oder mittels eines Befestigungselementes, wie zum Beispiel einer Schraube oder dergleichen an dieser befestigt sein. Entsprechendes gilt beispielsweise für einen Zentrierbolzen, der sich ebenfalls sehr gut für die Befestigung einer Verstärkungsfeder eignet. Darüber hinaus sind andere Weiterbildungen denkbar, die beispielsweise andere Bauteile oder Elemente der Kupplung für eine Befestigung der Verstärkungsfeder vorsehen. Letztlich ist die Verstärkungsfeder mittelbar oder unmittelbar mit dem Kupplungsdeckel fest verbunden.

Bei einer vorteilhaften Ausführungsform ist die Verstärkungsfeder an der Sensorfeder befestigt, in die Sensorfeder integriert oder an der Sensorfeder ausgebildet. Neben der bereits erwähnten Befestigung der Verstärkungsfeder an der Sensorfeder kann auch in Erwägung gezogen werden, die Verstärkungsfeder in die Sensorfeder zu integrieren, indem beispielsweise eine Sensorfeder radial verlängert wird und mit einem Ende oder irgendeinem anderen Kontaktelement in den Verstellbereich der Tellerfeder hinein reicht. Ein anderes Ende der Sensorfeder ist permanent an der Tellerfeder angeordnet und liegt an dieser unabhängig vom Ausrückweg permanent an.

Bei einer vorteilhaften Ausführungsform ist die Verstärkungsfeder an der Tellerfeder befestigt, in die Tellerfeder integriert oder an der Tellerfeder ausgebildet. Die Verstärkungsfeder ist somit eine bewegte Feder, die zusammen mit der Tellerfeder eine Bewegung beim Kupplungsvorgang ausführt und wobei im Verstellungsbereich der Verstärkungsfeder ein Bauteil oder Element angeordnet ist, welches sich zum Übertragen von Kräften eignet und somit auch zur ausrückaktivierten Beaufschlagung der Tellerfeder einsetzbar ist. Hierbei kann die Verstärkungsfeder an der Tellerfeder befestigt sein, oder beispielsweise blattfederartig von der Tellerfeder abgehen, sodass sowohl Verstärkungsfeder als auch Tellerfeder aus dem gleichen Werkstück hergestellt sind.

Bei einer vorteilhaften Ausführungsform ist in einem Verstellbereich der Verstärkungsfeder ein Bauteil, insbesondere die Sensorfeder, der Reibkupplung angeordnet, um einen Rückhalt für die ausrückaktivierte Beaufschlagung der Tellerfeder zu bilden. Somit kann die Sensorfeder eine weitere Funktion übernehmen, indem sie im Verstellbereich der Verstärkungsfeder angeordnet ist. Der Verstellbereich einer Feder ist der Raum, durch den die Feder sich während des Kupplungsvorgangs hindurchbewegt.

Bei einer vorteilhaften Ausführungsform weist die Verstärkungsfeder ein Kontaktelement zur Kontaktierung des Bauteils auf, wobei das Kontaktelement eine Kante, eine Rundung oder ein Endstück der Verstärkungsfeder ist. Vorteilhafterweise kann das Kontaktelement wieder entsprechend zum Bauteil oder zur Bauteilposition vorteilhaft ausgebildet werden.

Bei einer vorteilhaften Ausführungsform weist die Sensorkraft als Funktion des Ausrückweges ein Minimum auf, wobei das Minimum, bezogen auf den Ausrückweg, nicht im Unendlichen liegt. Das Minimum liegt auf dem Ausrückweg zwischen dem ersten Regelpunkt und dem Deckelanschlag beziehungsweise dem dahinterliegenden zweiten Regelpunkt. Das Minimum zeigt an, an welcher Stelle die Beaufschlagung der Tellerfeder durch die Verstärkungsfeder einsetzt. Die Anordnung des Kontaktelementes der Verstärkungsfeder im Verstellbereich der Tellerfeder entscheidet über die Position des Minimums. Bei einer vorteilhaften Ausführungsform ist der Ausrückweg des Minimums größer als der Ausrückweg des einzigen Regelpunktes und kleiner als ein Ausrückweg eines Deckelanschlages.

Vorteilhafte Ausführungsbeispiele und bevorzugte Weiterbildungen der Erfindung werden in der Figurenbeschreibung und/oder den Unteransprüchen näher beschrieben und erläutert.

Es zeigen:
- Fig. 1: ein Kräftediagramm einer selbstnachstellenden Reibkupplung,
- Fig. 2: ein Kräftediagramm einer selbstnachstellenden Reibkupplung mit Verstärkungsfeder,
- Fig. 3: ein erstes Ausführungsbeispiel einer Reibkupplung mit Verstärkungsfeder in einer radial geschnittenen Ansicht,
- Fig. 4: eine Baugruppe aus dem ersten Ausführungsbeispiel der Fig. 3 in geschnittener, perspektivischer Ansicht,
- Fig. 5: eine Verstärkungsfederkralle mit zwei Verstärkungsfedern zum Einsatz in der Reibkupplung gemäß dem ersten Ausführungsbeispiel der Fig. 3,
- Fig. 6: eine schematische Darstellung der Reibkupplung gemäß dem ersten Ausführungsbeispiel der Fig. 3,
- Fig. 7: die schematische Darstellung aus Fig. 6 bei ausrückaktivierter Beaufschlagung der Tellerfeder,
- Fig. 8a: ein zweites Ausführungsbeispiel einer Reibkupplung mit einer Verstärkungsfeder in einer radial geschnittenen Darstellung,
- Fig. 8b: eine mehrzüngige Verstärkungsfeder des zweiten Ausführungsbeispiels der Fig. 8a,
- Fig. 9: eine schematische Darstellung des zweiten Ausführungsbeispiels gemäß Fig. 8a, und
- Fig. 10: die schematische Darstellung gemäß Fig. 9 bei einer ausrückaktivierten Beaufschlagung der Tellerfeder.

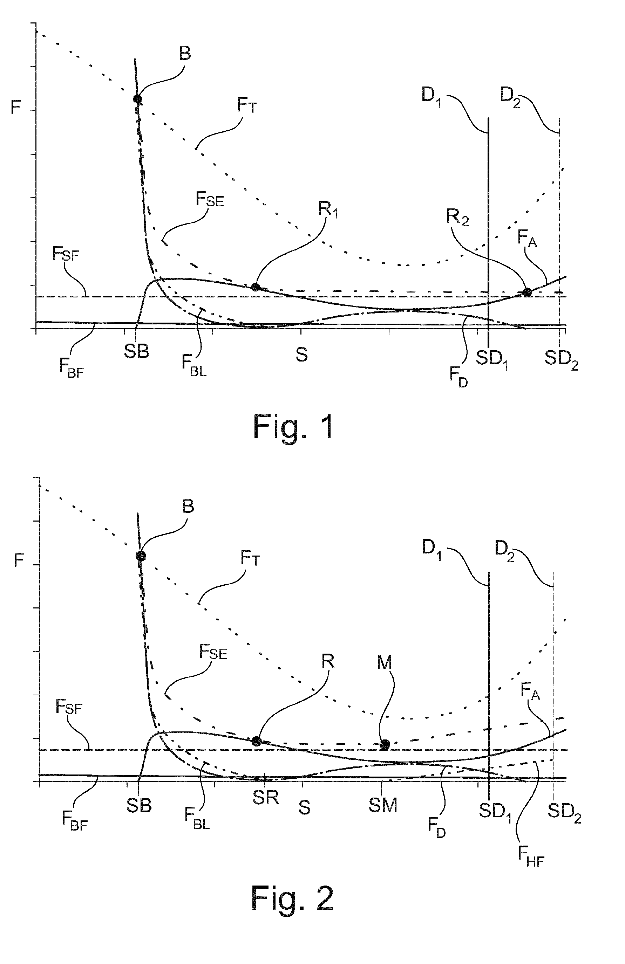

Fig. 1 zeigt die an einer selbsteinstellenden Kupplung teilhabenden Federkräfte in Abhängigkeit vom zurückgelegten Weg S des Ausrückers, kurz Ausrückweg S. Die selbsteinstellende Reibkupplung, die durch dieses Kräftediagramm charakterisiert wird, ist eine Reibkupplung mit keinem oder nur wenig Verschleiß an der Anpressplatte. Dies ist daran zu erkennen, dass der zweite Regelpunkt R₂ bei höheren Ausrückwegen S liegt als der Deckelanschlag D₁. Die Tellerfederkraft F_{T} variiert stark über den Ausrückweg S eines Kupplungsvorgangs, zumal die Tellerfeder aufgrund ihrer Struktur zwischen zwei bevorzugten Einformungszuständen hin und her schaltet. Das ist auch der Grund dafür, weshalb die Tellerfederkraft F_{T} nach einem nahezu linearen Abfall bei kleinen Ausrückwegen S im Anschluss bei großen Ausrückwegen S wieder ansteigt. Im Gegensatz dazu fällt die Sensorkraft F_{SE} bei einer Kupplungsbetätigung aus dem Betriebspunkt B heraus steil ab, um nach dem Regelpunkt R₁ nahezu konstant über dem Ausrückweg S weiter zu verlaufen.

Die Sensorkraft F_{SE} setzt sich zusammen aus der Sensorfederkraft F_{SF} der Sensorfeder, der Haltefederkraft F_{BF} der Haltefedern und der Belagfederkraft F_{BL} der Belagfedern. In diesem Ausführungsbeispiel summieren sich also die Belagfederkraft F_{BL}, die Haltefederkraft F_{BF} und die Sensorfederkraft F_{SF} zur Sensorkraft F_{SE} auf, die bei anderen selbstnachstellenden Kupplungen gegebenenfalls noch weitere Kraftsummanden anderer Federn aufweist.

Die Ausrückkraft F_{A} ist die Kraft, die für die Durchführung des Kupplungsvorgangs aufgewendet werden muss. Die Ausrückkraft F_{A} steigt ab dem Ausrückweg SB, der dem Betriebspunkt B zugeordnet ist, steil an, um kurz vor dem ersten Regelpunkt R₁ wieder abzufallen. Der erste Regelpunkt R₁ ist durch die Gleichheit der Sensorkraft F_{SE} und der Ausrückkraft F_{A} definiert. Ab dem ersten Regelpunkt R₁ fällt die Ausrückkraft F_{A} erheblich, sodass der gewünschte Fahrkomfort entsteht, der lediglich einen einmaligen Kraftaufwand zur Kupplungsbetätigung erfordert. Gerade beim manuellen Kuppeln entsteht somit der gewünschte Komforteffekt für den Fahrer.

Der zweite Regelpunkt R₂ wird ebenfalls dadurch definiert, dass die Ausrückkraft F_{A} und die Sensorkraft F_{SE} gleich sind. Dies stellt so lange kein Problem dar bis der Deckelanschlag D₁ aufgrund von Reibverschleiß derart durch die Selbstverstellung geändert werden muss, dass der Regelpunkt R₂ nachteiligerweise in den Verstellweg eines Kupplungsvorgangs gelangt. Der Verstellweg für einen Kupplungsvorgang ist durch die Punkte SB und SD₁ definiert, die das zugehörige Intervall für einen Kupplungsvorgang bilden.

Daran ist problematisch, dass durch die Selbstnachstellung ein neues Problem entsteht, nämlich dass der zweite Regelpunkt R₂ bei einem verschleißbedingten Deckelanschlag D₂ bei SD₂ leider in den Ausrückweg des Kupplungsvorgangs verschoben wird, der bei Verschleiß durch das Intervall SB,SD₂ definiert ist. Das bekannte Problem des nachteiligen Kräfteverhaltens der selbstnachstellenden Kupplung entsteht.

Fig. 2 zeigt ein Kräftediagramm einer nachstellenden Reibkupplung mit einer Verstärkungsfeder, die eine ausrückaktivierte Beaufschlagung ab dem Minimum M bei SM umsetzt und einen im Wesentlichen linearen Anstieg für Ausrückwege S > SM bewirkt. Alle anderen Kräfte und definierten Punkte sind aus dem Diagramm der Fig. 1 bekannt. Die Ausführungen zu Fig. 1 gelten entsprechend.

Das nachteilige, erneute Ansteigen der Ausrückkraft F_{A} kann durch die Platzierung des Minimums M an der Stelle SM hervorragend kompensiert werden, zumal die Sensorkraft F_{SE} aufgrund des additiven Beitrages der Verstärkungskraft F_{HF} nunmehr einen anderen Verlauf nimmt, der einen Schnittpunkt mit der Ausrückkraft F_{A} vor dem Deckelanschlag D₂ oder generell ausschließt. Denn dabei ist nicht erforderlich, dass ein Schnittpunkt, der einen zweiten Regelpunkt bilden würde, generell ausgeschlossen ist, sondern zumindest innerhalb des maximalen Nachstellweges, der auch die Ausrückwege SD₁,SD₂ der Deckelanschläge D₁,D₂ einschließt, nicht vorkommt. Stellt also beispielsweise der Deckelanschlag D₂ die maximale Nachstellung dar, so ist das Auftreten eines zweiten Regelpunktes ausgeschlossen. Folglich ist der Regelpunkt R der einzige Regelpunkt der selbstnachstellenden Reibkupplung.

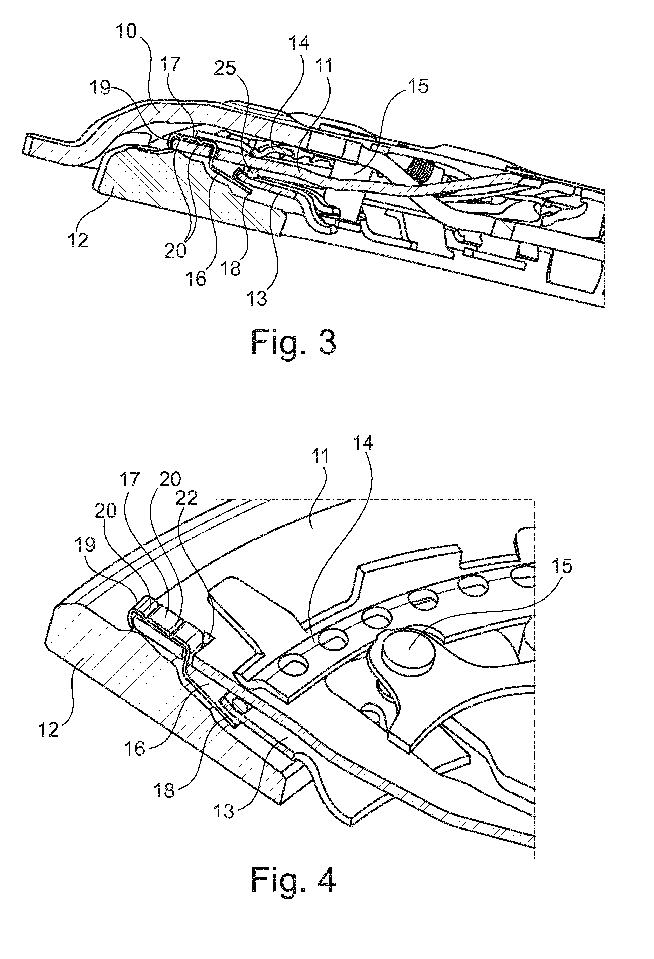

Fig. 3 zeigt ein erstes Ausführungsbeispiel einer Reibkupplung mit Selbstnachstellung und mit einer Verstärkungsfeder 16. Die Verstärkungsfeder 16 ist an der Tellerfeder 11 radial außen befestigt, indem ein Befestigungsstück 17 der Verstärkungsfeder 16 zum einen teilweise durch die Tellerfeder 11 hindurch geführt ist und zum anderen am radial äußeren, radialen Hintergriff 19 der Tellerfeder 11 vorgesehen ist. Damit bildet das Befestigungsstück 17 eine Klammer aus, die stirnseitig auf der Tellerfeder 11 mittels der beiden Setzkanten 20 in seiner Position festgelegt ist. Die Verstärkungsfeder 16 weist an deren dem Befestigungsstück 17 gegenüberliegenden Endstück 18 ein Kontaktelement auf, welches zur Wechselwirkung mit der Sensorfeder 13 vorgesehen ist. Die Reibkupplung befindet sich in Fig. 3 im gekuppelten Zustand, wie er in der Fig. 2 durch den Betriebspunkt B beschrieben ist. Das Endstück 18 nimmt einen Axialabstand zur Sensorfeder 13 ein, womit sichergestellt ist, dass beim Bestätigen des nicht abgebildeten Ausrückers, die Tellerfeder 11 auf dem Verstellring 14 aufliegend radial außen im Bereich des Befestigungsstückes 17 der Verstärkungsfeder 16 axial in Richtung Kupplungsdeckel 10 bewegt wird, wobei die Verstärkungsfeder 16 mit deren Endstück 18 auf die Sensorfeder 13 drückt. Sobald der Kontakt zur Sensorfeder 13 etabliert ist, findet die ausrückaktivierte Beaufschlagung der Tellerfeder 11 statt, indem die Verstärkungsfeder 16 elastisch beansprucht und damit gegenüber der Tellerfeder 11 vorgespannt wird. Für den verbleibenden Ausrückweg steigt die Federkraft der Verstärkungsfeder 16 im Wesentlichen linear an und trägt zur Sensorkraft additiv bei.

Fig. 4 zeigt die Verstärkungsfeder 16 im installierten Zustand an einer Baugruppe der Reibkupplung Fig. 3. Zur Installation eignet sich die Verstärkungsfeder 16 deshalb, weil sie im Wesentlichen als Blattfeder herstellbar ist. Während der Installation kann das Endstück 18 in das Loch 22 der Tellerfeder 11 eingeführt werden, sodass zuletzt nur noch die Setzkanten 20 zusammen mit dem radialen Hintergriff 19 am radialen Außenbereich der Tellerfeder 11 angebracht werden müssen. Auf diese Weise kann die gewünschte Anzahl von Verstärkungsfedern 16 an verschiedenen Umfangspositionen installiert werden.

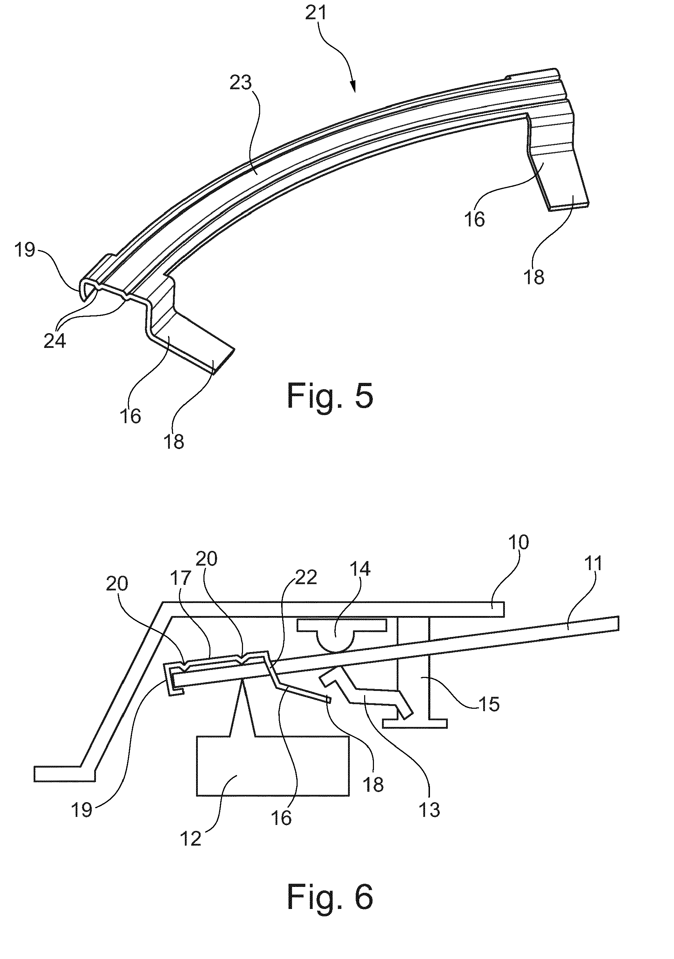

Fig. 5 zeigt eine Verstärkungsfederkralle 21, die über ein Verbindungselement 23, welches auch die Setzkanten 24 aufweist, zwei Verstärkungsfedern 16 in Umfangsrichtung miteinander verbindet. Dadurch ergibt sich ein verbesserter Sitz an der Tellerfeder 11, zumal die Setzkanten 24 über ein längeres Umfangsstück bis zur anderen Verstärkungsfeder 16 verlaufen.

Auch für die Installation ergeben sich Vorteile, weil zwei Verstärkungsfedern 16 in einem Arbeitsschritt an der Reibkupplung installiert werden können. Somit eignet sich die Verstärkungsfederkralle 21 hervorragend, zwei Verstärkungsfedern 16 des ersten Ausführungsbeispiels gemäß den Fig. 3 und 4 vorteilhaft zu ersetzen.

Fig. 6 zeigt die Reibkupplung gemäß dem ersten Ausführungsbeispiel der Figuren 3 und 4 in schematischer, das heißt stark vereinfachter, Art und Weise in einem Zustand, in dem sich die Reibkupplung bei einem Ausrückweg S < SM noch vor dem Minimum M befindet. Die Beaufschlagung durch die Verstärkungsfeder 16 findet noch nicht statt, weil der Kontakt mit der Sensorfeder 13 noch nicht hergestellt ist. In diesem Zustand ist die Verstärkungsfeder 16 elastisch unbeansprucht.

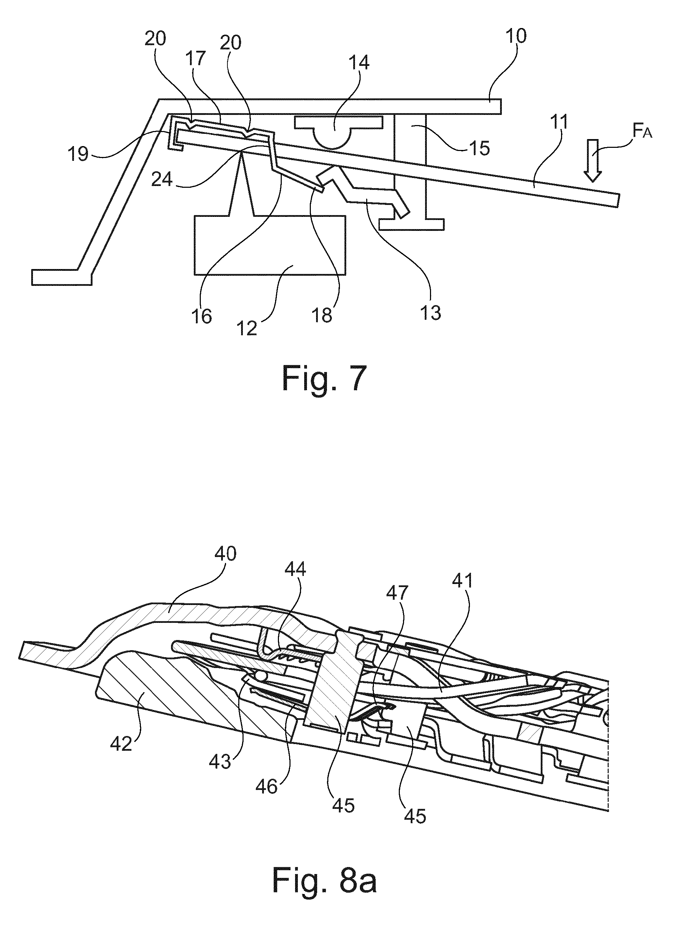

Die Bezugszeichen der Fig. 6 und 7 bezeichnen schematische Bauteile, die mit den in den Figuren 3 und 4 gleichermaßen bezeichneten Bauteilen übereinstimmen.

Fig. 7 zeigt die Verstärkungsfeder 16 in einem ausrückaktivierten Beaufschlagungszustand, der einem Ausrückweg S > SM entspricht, der nach dem Minimum M liegt. Des Weiteren befindet sich die Verstärkungsfeder 16 schon im Endanschlag an der Innenseite des Kupplungsdeckels 10, sodass die Selbstnachstellung hier bereits an deren Grenzen gestoßen ist.

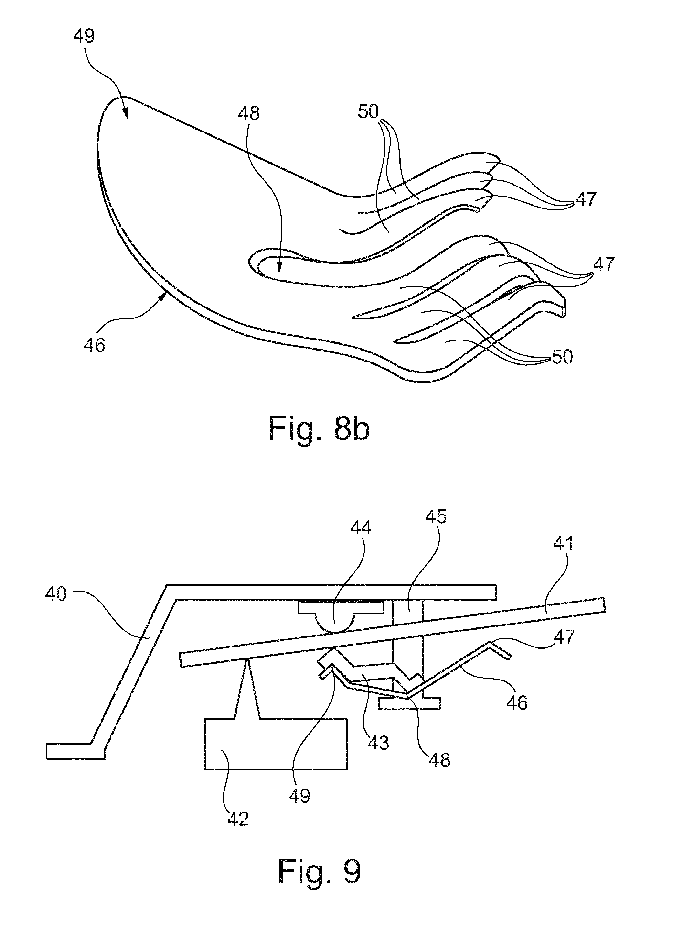

Fig. 8a und 8b zeigen ein zweites Ausführungsbeispiel einer Reibkupplung mit einer Verstärkungsfeder 46, die an der Sensorfeder 43 angelehnt oder an der Sensorfeder 43 befestigt ist. Vorteilhaferweise ist die Verstärkungsfeder 46 derart angeordnet, dass deren Zungen 50, die radial nach innen gerichtet sind im Zentrierbereich 48 den Zentrierbolzen 45 umgreifen.

Die Rundungen 47 der Zungen 50 bilden jeweils Kontaktelemente der Verstärkungsfeder 46 und sind im Verstellbereich der Tellerfeder 41 angeordnet, die im gezeigten Zustand die Kupplungskraft für eine Drehmomentübertragung auf das Getriebe aufbringt, sich die Reibkupplung also im Betriebspunkt B des Kräftediagrammes der Fig. 2 befindet.

Bei einer ausrückaktivierten Beaufschlagung der Tellerfeder 41 wird die Kräfteübertragung von der Verstärkungsfeder 46 nicht unmittelbar auf die Tellerfeder 41 geleitet, sondern zunächst auf die Sensorfeder 43 über den Kontaktbereich 49 übertragen, wobei die Sensorfeder 43 wiederum die Kraft zur Tellerfeder 41 weiterleitet.

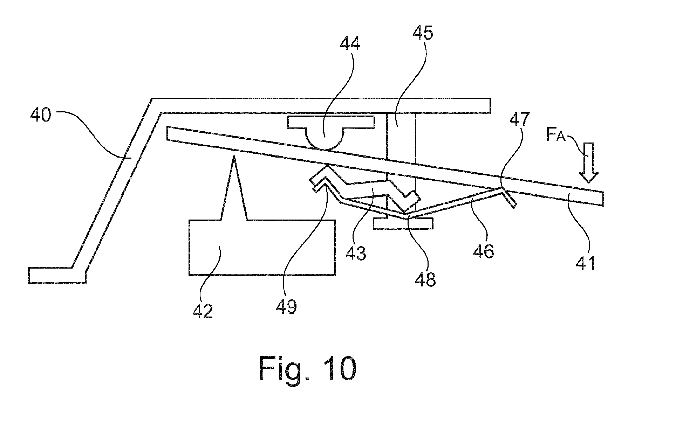

Fig. 9 und 10 zeigen das Ausführungsbeispiel einer Reibkupplung gemäß Fig. 8 in einer schematischen Darstellung, wobei die schematisch dargestellten Bauteile die gleichen Bezugszeichen aufweisen, wie die entsprechenden in den Fig. 8a und 8b gezeigten Bauteile.

Fig. 9 zeigt die Reibkupplung in einem Betriebszustand, der dem Betriebspunkt B des Kräftediagramms aus Fig. 2 entspricht. Die Rundung 47, die alternativ auch als Kante ausgebildet sein kann, ist axial zur Tellerfeder 41 beabstandet, liegt aber in deren Verstellbereich, womit die Verstärkungsfeder 46 nicht vorgespannt ist. Ferner liegt die Verstärkungsfeder 46 in der Sensorfeder 43 ein, womit eine Befestigung an der Sensorfeder 43 nicht erforderlich ist, sondern eine Haltung der Verstärkungsfeder 46 mit Hilfe des Zentrierbolzens 45 gewährleistet werden kann.

Fig. 10 zeigt die Verstärkungsfeder 46 in einem gegenüber der Tellerfeder 41 beaufschlagten Zustand, zumal die Tellerfeder 46 nunmehr die Sensorfeder 43 unterstützt, indem sie auf diese ihre Verstärkungsfederkraft überträgt.

Zusammenfassend betrifft die Erfindung eine Reibkupplung zum kraftschlüssigen Verbinden einer Anpressplatte 12,42 mit einer angetriebenen Kupplungsscheibe, wobei eine Tellerfeder 11,41 gegenüber einem Kupplungsdeckel 10,40 vorgespannt ist, um die Anpressplatte 12,42 mit einer Tellerfederkraft F_{T} zu beaufschlagen, wobei eine Sensorkraft F_{SE} der Tellerfederkraft F_{T} permanent entgegengerichtet ist. Aufgrund der Selbstnachstellung laufen Reibkupplungen Gefahr einen zweiten Regelpunkt R₂ im Ausrückweg des Kupplungsvorganges hervorzubringen. Dies zieht verschiedene Nachteile, insbesondere einen Komfortverlust, nach sich. Daher wird vorgeschlagen, eine Verstärkungsfeder 16,46 zur ausrückaktivierten Beaufschlagung der Tellerfeder 11,41 vorzusehen, wobei die ausrückaktivierte Beaufschlagung der Tellerfederkraft F_{T} entgegen gerichtet ist. Damit kann dem charakteristischen Verhalten der Tellerfederkraft F_{T} bei großen Ausrückwegen entgegengewirkt werden, indem die Sensorkraft F_{SE} ausrückaktiviert teilweise auf die Verstärkungskraft F_{HF} der Verstärkungsfeder 16,46 zurückgeht. Auf diese Weise ist es möglich höhere Lebensdauern für Reibkupplungen mit Selbstnachstellung zu erzielen.

### Bezugszeichenliste

- B: Betriebspunkt
- D₁: Deckelanschlag ohne Verschleiß
- D₂: Deckelanschlag mit Verschleiß
- F: Federkraft
- F_{A}: Ausrückkraft
- F_{BF}: Haltefederkraft
- F_{BL}: Belagfederkaft
- F_{D}: Deckelkraft
- F_{HF}: Verstärkungskraft
- F_{SE}: Sensorkraft
- F_{SF}: Sensorfederkraft
- F_{T}: Tellerfederkraft
- R: Regelpunkt
- R₁: erster Regelpunkt
- R₂: zweiter Regelpunkt
- S: Ausrückweg
- SB: Ausrückweg im Betriebspunkt
- SD₁: Deckelanschlag ohne Verschleiß
- SD₂: Deckelanschlag mit Verschleiß
- S_{H}: Ausrückweg der minimalen Sensorkraft
- S_{K}: Ausrückweg bei Kontakt
- SM: Ausrückweg im Minimum
- SR: Ausrückweg zum Regelpunkt

- 10: Kupplungsdeckel
- 11: Tellerfeder
- 12: Anpressplatte
- 13: Sensorfeder
- 14: Verstellring
- 15: Zentrierbolzen
- 16: Verstärkungsfeder
- 17: Befestigungsstück
- 18: Endstück
- 19: radialer Hintergriff
- 20: Setzkante
- 21: Verstärkungsfederkralle
- 22: Loch
- 23: Verbindungselement
- 24: Setzkante
- 40: Kupplungsdeckel
- 41: Tellerfeder
- 42: Anpressplatte
- 43: Sensorfeder
- 44: Verstellring
- 45: Zentrierbolzen
- 46: Verstärkungsfeder
- 47: Rundung
- 48: Zentrierbereich
- 49: Kontaktbereich für Sensorfeder
- 50: Federzungen

## Patentansprüche

1. Reibkupplung zum kraftschlüssigen Verbinden einer Anpressplatte (12,42) mit einer angetriebenen Kupplungsscheibe, wobei eine Tellerfeder (11,41) gegenüber einem Kupplungsdeckel (10,40) vorgespannt ist, um die Anpressplatte (12,42) mit einer Tellerfederkraft (F_{T}) zu beaufschlagen, wobei eine Sensorkraft (F_{SF}) der Tellerfederkraft (F_{T}) permanent entgegengerichtet ist, **dadurch gekennzeichnet, dass** eine Verstärkungsfeder (16,46) zur ausrückaktivierten Beaufschlagung der Tellerfeder (11,41) vorgesehen ist, wobei die ausrückaktivierte Beaufschlagung der Tellerfederkraft (F_{T}) entgegen gerichtet ist.

2. Reibkupplung nach Anspruch 1, wobei ein Kontaktelement der Verstärkungsfeder (46) in einem Verstellbereich der Tellerfeder (41) angeordnet ist.

3. Reibkupplung nach Anspruch 2, wobei das Kontaktelement eine Kante, eine Rundung (47) oder ein Endstück der Verstärkungsfeder (46) ist.

4. Reibkupplung nach einem der vorhergehenden Ansprüche, wobei die Verstärkungsfeder (46) an einer Sensorfeder (43) oder mittelbar am Kupplungsdeckel (40) oder unmittelbar am Kupplungsdeckel fest ist.

5. Reibkupplung nach einem der Ansprüche 2 oder 3, wobei die Verstärkungsfeder (46) an der Sensorfeder (43) befestigt, in die Sensorfeder integriert oder an der Sensorfeder ausgebildet ist.

6. Reibkupplung nach Anspruch 1, wobei die Verstärkungsfeder an der Tellerfeder befestigt, in die Tellerfeder integriert oder an der Tellerfeder ausgebildet ist.

7. Reibkupplung nach Anspruch 6, wobei in einem Verstellbereich der Verstärkungsfeder (16) ein Bauteil, insbesondere die Sensorfeder (13), der Reibkupplung angeordnet ist, um einen Rückhalt für die ausrückaktivierte Beaufschlagung der Tellerfeder (11) zu bilden.

8. Reibkupplung nach Anspruch 7, wobei die Verstärkungsfeder (16) ein Kontaktelement zur Kontaktierung des Bauteils aufweist, wobei das Kontaktelement eine Kante, eine Rundung oder ein Endstück (18) der Verstärkungsfeder (16) ist.

9. Reibkupplung nach einem der vorhergehenden Ansprüche, wobei die Sensorkraft (F_{SE}) als Funktion des Ausrückweges (S) ein Minimum (M) aufweist, wobei das Minimum (M) nicht im Unendlichen liegt.

10. Reibkupplung nach Anspruch 9, wobei ein Ausrückweg (SM) des Minimums (M) größer als ein Ausrückweg (S_{R}) des einzigen Regelpunktes (R) und kleiner als ein Ausrückweg (SD₁,SD₂) eines Deckelanschlages (D₁,D₂) ist.
